# EUROPÄISCHE PATENTSCHRIFT

(11) **EP 0 794 365 B1**
(45) Veröffentlichungstag und Bekanntmachung des Hinweises auf die Patenterteilung: **10.01.2001**
(21) Anmeldenummer: 97102965.7
(22) Anmeldetag: 24.02.1997
(51) Int. Cl.: F16H 63/36

(54) **Schaltvorrichtung für ein Zahnräderwechselgetriebe**
Shift actuator for a change-speed gearbox
Dispositif de commande d'une boîte de vitesses

(30) Priorität: 09.03.1996 DE 19609210
(43) Veröffentlichungstag der Anmeldung: 10.09.1997
(73) Patentinhaber: DaimlerChrysler AG, 70567 Stuttgart (DE)
(72) Erfinder: Neubauer, Hans-Jürgen, 73630 Remshalden (DE); Schetter, Martin, 74354 Besigheim (DE)

(56) Entgegenhaltungen:
- EP-A- 0 331 278
- DE-A- 2 132 736
- DE-A- 4 118 931
- US-A- 5 191 806

## Beschreibung

Die Erfindung bezieht sich auf eine Schaltvorrichtung nach dem Oberbegriff von Patentanspruch 1.

Bei einer gattungsgemäßen Schaltvorrichtung der eingangs genannten Art (DE 41 18 931 A1) ist das schwenkbewegliche Sperrglied in Form eines zweiarmigen Sperrhebels ausgebildet, der an einer zwischen seinen Hebelenden liegenden mittleren Stelle am Getriebegehäuse schwenkbar gelagert ist, an seinem einen Hebelarm die Ausnehmung für den Eingriff des linearbeweglichen Sperrgliedes aufweist sowie mit seinem anderen Hebelende durch einen Sperrnocken mit einer korrespondierenden Gegennockenkontur der Schaltschwinge so zusammenarbeitet, daß der Sperrnocken in der dem ausgerückten Zustand der Zahnradkupplung entsprechenden Neutralstellung der Schaltschwinge durch eine am Sperrhebel angreifende Rückstellfeder in Eingriff mit der Gegennockenkontur an der Schaltschwinge gehalten - dagegen beim Betätigen der Schaltschwinge in eine dem eingerückten Zustand der anderen Zahnradkupplung entsprechende Gangstellung durch die Gegennockenkontur in seine andere Endstellung geschwenkt wird, in welcher nicht mehr die Ausnehmung des Sperrhebels, sondern dessen Sperrfläche mit der geometrischen Achse für die Bewegungen des linearbeweglichen Sperrgliedes in Überdeckung steht. Bei Verwendung einer zusätzlichen Schaltschwinge müssen bei dieser bekannten Schaltvorrichtung ein mit der zweiten Schaltschwinge zusammenarbeitender zweiter zweiarmiger Sperrhebel sowie ein sowohl mit beiden zweiarmigen Sperrhebeln als auch mit der ersten Schaltschwinge zusammenarbeitendes Zwischensperrgestänge vorgesehen sein, so daß diese bekannte Schaltvorrichtung einen komplizierten Aufbau erfordert.

Aus der DE-OS 21 32 736 ist weiterhin eine Schaltvorrichtung für Geschwindigkeitswechselgetriebe von Fahrzeugen mit drei zu sperrenden Schaltstangen bekannt, bei welcher zwischen den Schaltstangen zylindrische federbelastete Sperrglieder angeordnet sind, die in einer Lagerbohrung des Getriebegehäuses axial verschiebbar gehalten werden und bei der die Schaltstangen in Form eines Dreiecks angeordnet sind. Um jeweils zwei Schaltstangen gleichzeitig zu sperren und nur eine für die Schaltung frei zu geben - wobei die benötigten Schaltmittel und deren Lagerung einfach herzustellen, raumsparend angeordnet sein und eine sichere Sperrung ermöglichen sollen - ist bei dieser bekannten Schaltsperrvorrichtung die Anordnung so getroffen, dass die Sperrglieder in einer zwei Schaltstangen verbindenden Lagerbohrung des Getriebegehäuses verschiebbar gelagert sind, wobei die Sperrglieder endseitig im Bereich einer weiteren rechtwinklig in die Lagerbohrung mündenden Verriegelungsbohrung mit Schrägflächen versehen sind, und in die Verriegelungsbohrung eine Kugel eingesetzt ist, die mit den Schrägflächen der Sperrglieder zusammenarbeitet.

Aus der DE 29 30 151 A1 ist schließlich noch ein Zahnräderwechselgetriebe der Vorgelegebauart bekannt, bei welchem in einem an ein Kupplungsgehäuse angeflanschten Getriebegehäuse drei parallel zu den Getriebewellen angeordnete Schaltstangen axialverschiebbar gelagert sind, von denen zwei jeweils bewegungsfest mit dem Gabelschaft einer zugehörigen linearbeweglichen Schaltgabel und die dritte gelenkig mit dem Gabelschaft einer zugehörigen,schwenkbar gegenüber dem Getriebegehäuse gelagerten Schaltgabel verbunden sind.

Die der Erfindung zugrunde liegende Aufgabe besteht im wesentlichen darin, eine Schaltvorrichtung der eingangs genannten Art zu schaffen, welche sich sowohl durch einen einfachen Aufbau der Sperrmittel auszeichnet als auch in einfacher Weise für die Verwendung von mehr als einer Schaltschwinge und/oder Schaltstange erweiterbar ist.

Die erläuterte Aufgabe ist gemäß der Erfindung mit den kennzeichnenden Merkmalen von Patentanspruch 1 in vorteilhafter Weise gelöst.

Bei der Schaltvorrichtung nach der Erfindung sind das gehäuseseitige Schwenklager sowie die Rückstellfeder für das schwenkbewegliche Sperrglied entfallen und die Genauigkeit des kinematischen Zusammenwirkens zwischen Schaltschwinge und schwenkbeweglichem Sperrglied durch eine diesbezügliche Anordnung eines Schwenklagers optimiert.

Bei der Schaltvorrichtung nach der Erfindung sind die Sperrmittel zwischen Schaltstange und Schaltschwinge auf dem kürzesten Wege zur Wirkung gebracht.

Bei der Schaltvorrichtung nach der Erfindung sind die Sperrmittel in einfacher und vorteilhafter Weise auf die Erweiterung der Schaltmittel durch eine zweite Schaltschwinge durch die Ausgestaltung nach Patentanspruch 2 angepaßt.

Bei der Schaltvorrichtung nach der Erfindung sind die Sperrmittel in einfacher und vorteilhafter Weise auf die Erweiterung der Schaltmittel durch eine zweite Schaltstange durch die Ausgestaltung nach Patentanspruch 3 angepaßt.

Bei der Schaltvorrichtung nach der Erfindung können linear- und schwenkbewegliche Sperrglieder über ihre Neigungsflächen direkt in gegenseitigen Eingriff gebracht werden. Dieser Eingriff gestaltet sich einfacher, wenn nach der Anordnung von Patenanspruch 4 jeweils eine Kugel zwischengeschaltet ist.

Die Patentansprüche 5 bis 11 haben im wesentlichen die vorteilhafte Ausgestaltung der Sperrmittel einschließlich eines letztere aufnehmenden Sperrengehäuses in Blechpreßtechnik bei der Schaltvorrichtung nach der Erfindung zum Gegenstand.

Bei der Schaltvorrichtung nach der Erfindung werden keine zusätzlichen Schaltstangen zur Betätigung oder Verriegelung der Schaltschwingen benötigt.

Bei der Schaltvorrichtung nach der Erfindung ist es unerheblich, in welcher zahlenmäßigen Verteilung auf die Getriebewellen die Gesamtanzahl der Zahnradkupplungen angeordnet ist.

Bei der Schaltvorrichtung nach der Erfindung ist der zahlenmäßige Anteil der Schaltschwingen an den Betätigungsmitteln der Zahnradkupplungen unerheblich.

Bei der Schaltvorrichtung nach der Erfindung kann eine zentrale Schaltwelle mit mehreren Schaltfingern zur Betätigung sämtlicher Zahnradkupplungen Verwendung finden - insbesondere mit je einem Schaltfinger für die Schaltschwingen.

Bei der Schaltvorrichtung nach der Erfindung trägt ein in der Getriebemitte angeordneter "brillenförmiger" Lagerschild ein zentrales Sperrengehäuse, in welchem die Bewegungen aller Schaltstangen und -schwingen zusammengeführt sind.

Bei der Schaltvorrichtung nach der Erfindung kann das die Kugeln und Sperrglieder aufnehmende Sperrengehäuse als eine vormontierbare Baueinheit an dem Lagerschild aufgehängt sein.

Bei der Schaltvorrichtung nach der Erfindung ist eine reibungsarme Abstützung der durch den Fahrer am Handschalthebel eingeleiteten Kräfte durch Auflage der Schaltfinger direkt auf die Schaltschwingen und somit auf die Schwingendrehpunkte mit einer Untersetzung der durch die Kraftabstützung hervorgerufenen Reibmomente im Verhältnis Bolzenradius/Radius Eingriff.

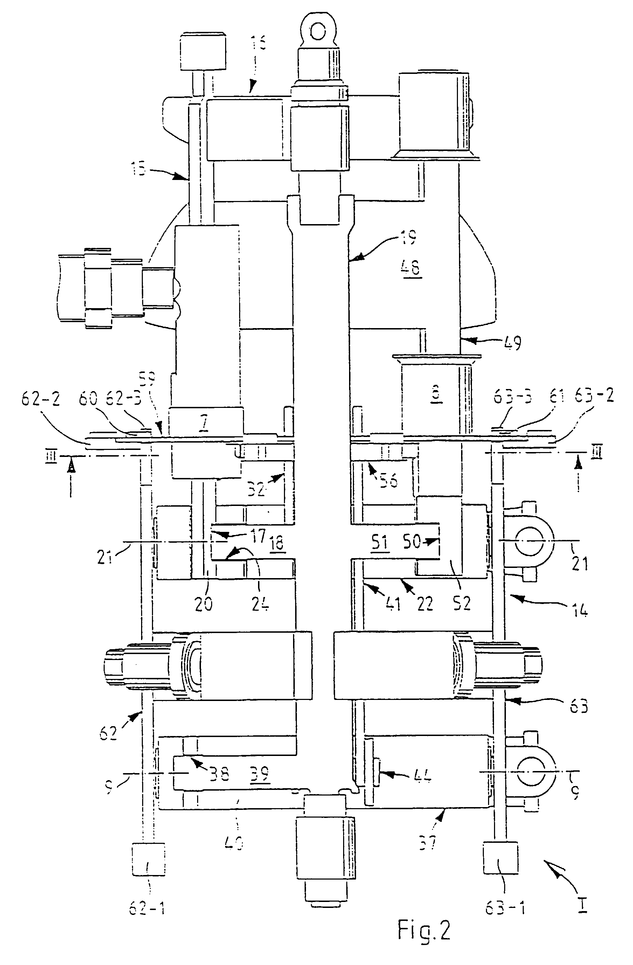

Die Erfindung ist nachstehend anhand einer in der Zeichnung schematisch dargestellten Ausführungsform näher beschrieben. In der Zeichnung bedeuten
- Fig. 1: eine perspektivische Darstellung einer Schaltvorrichtung nach der Erfindung für ein nicht näher dargestelltes Zahnräderwechselgetriebe, etwa in Pfeilrichtung I der Fig. 2 gesehen,
- Fig. 2: eine Draufsicht auf die durch eine Schaltwelle ergänzte Schaltvorrichtung von Fig. 1,

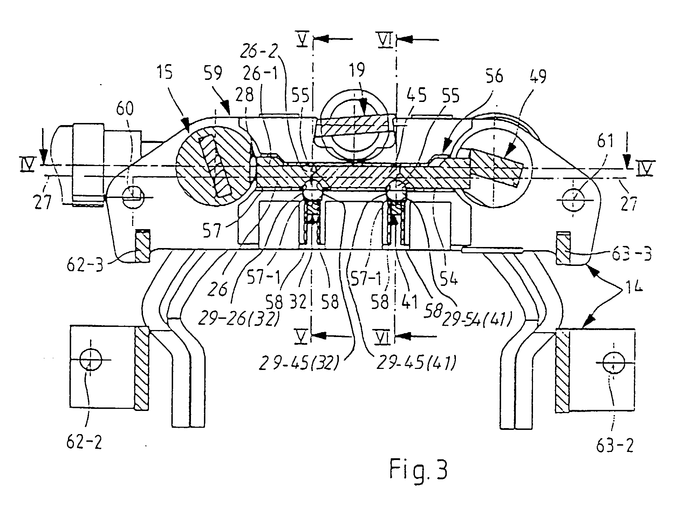

- Fig. 3: einen Querschnitt durch die Schaltvorrichtung von Fig. 2 nach Linie III-III,

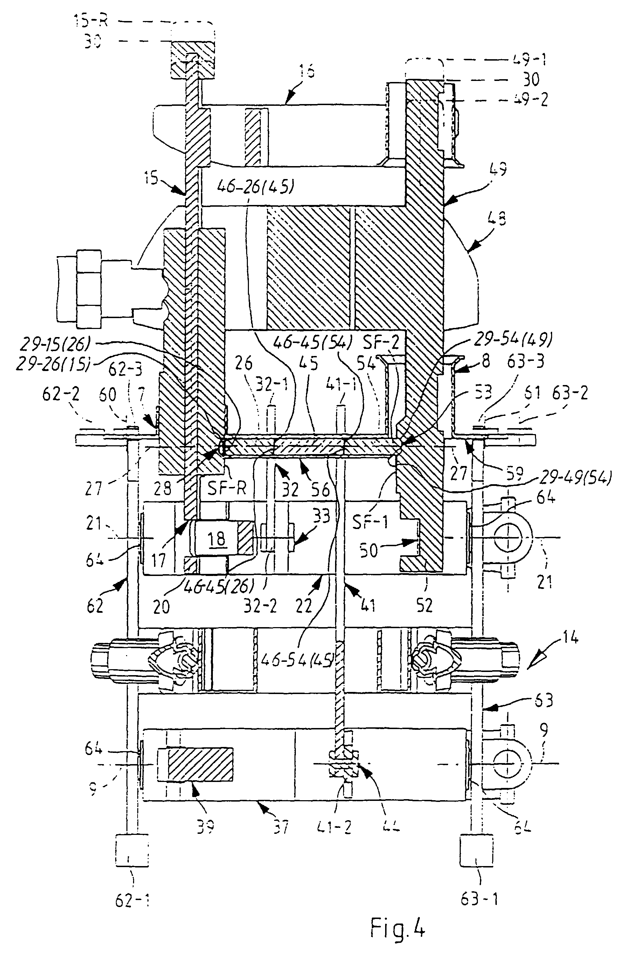

- Fig. 4: einen Längsschnitt durch die Schaltvorrichtung von Fig. 2 nach Linie IV-IV in Fig. 3,

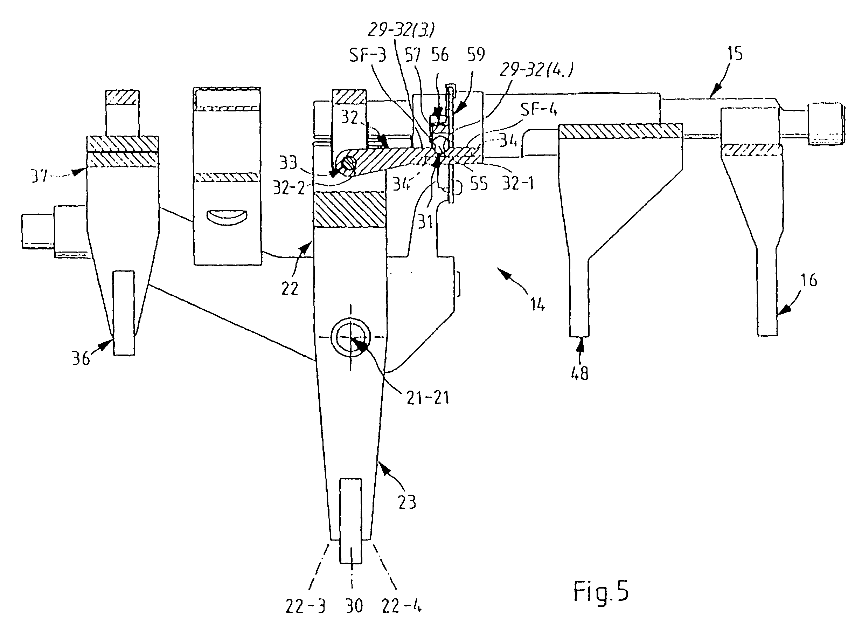

- Fig. 5: einen Längsschnitt durch die Schaltvorrichtung von Fig. 2 nach Linie V-V in Fig. 3, und

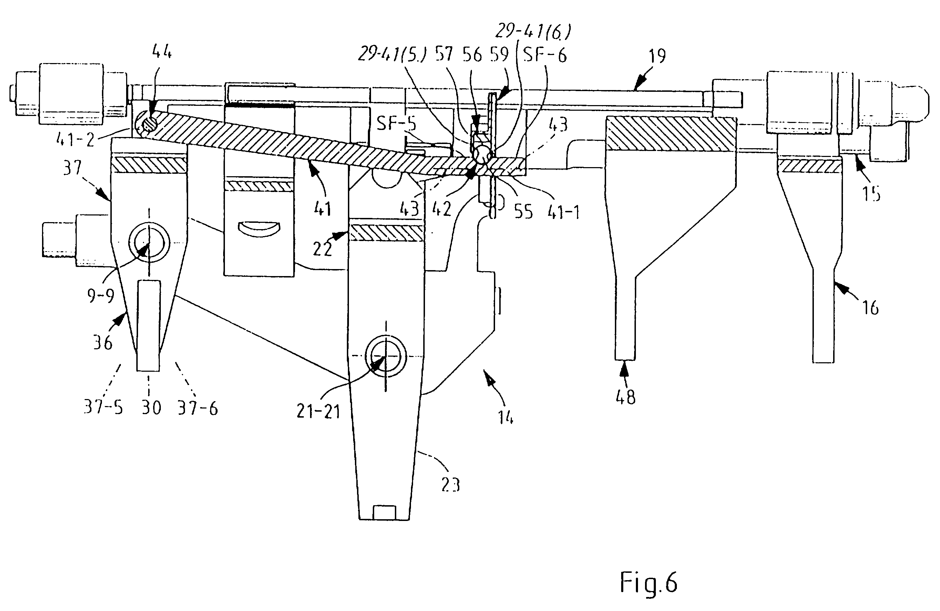

- Fig. 6: einen Längsschnitt durch die Schaltvorrichtung von Fig. 2 nach Linie VI-VI in Fig. 3.

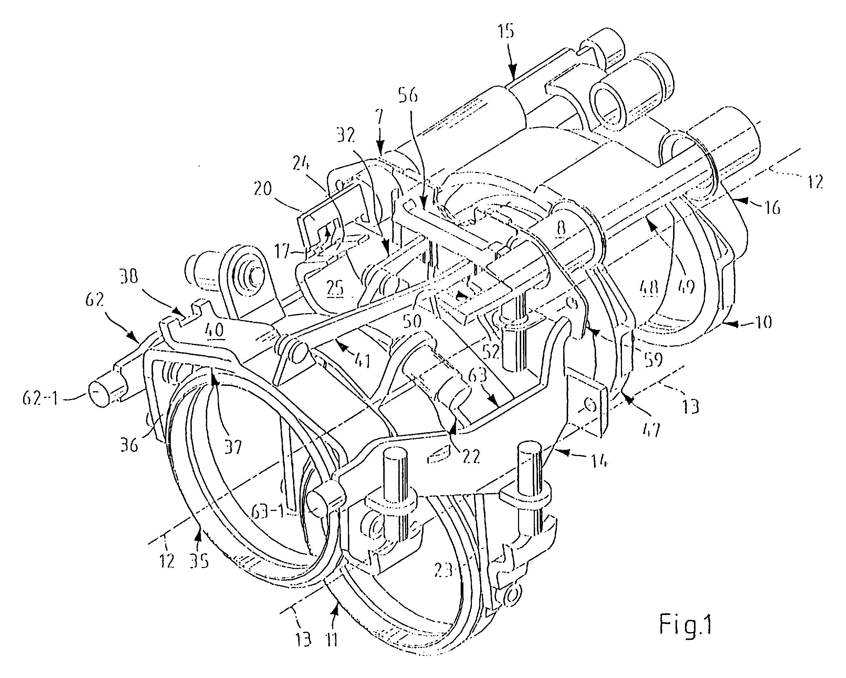

Unter Bezugnahme zunächst auf Fig. 1 sind konzentrisch zur Drehachse 12-12 von Ein- und Ausgangswelle eines Zahnräderwechselgetriebes eine Schaltschiebemuffe 10 einer Zahnradkupplung zum Ankuppeln eines Zahnrades an die Ausgangswelle, eine Schaltschiebemuffe 47 einer Wechsel-Zahnradkupplung zum wahlweisen Ankuppeln eines von zwei weiteren Zahnrädern an die Ausgangswelle sowie eine Schaltschiebemuffe 35 einer Wechsel-Zahnradkupplung zum wahlweisen Ankuppeln eines weiteren Zahnrades oder der Eingangswelle an die Ausgangswelle angeordnet.

Konzentrisch zur Drehachse 13-13 einer zu Ein- und Ausgangswelle parallelen Vorgelegewelle ist eine vierte Schaltschiebemuffe 11 einer Wechsel-Zahnradkupplung zum wahlweisen Ankuppeln eines von zwei Zahnrädern an die Vorgelegewelle angeordnet.

Die Schaltschiebemuffe 10 wird in der üblichen Weise durch eine Schaltgabel 16 betätigt, welche mit einer Schaltstange 15 fest verbunden ist, die achsparallel zu den Getriebewellen und axial verschiebbar gegenüber dem nicht näher dargestellten Getriebegehäuse angeordnet und mit einem Mitnehmer 20 einteilig ausgebildet ist. Der Mitnehmer 20 weist eine Schaltnut 17 für den Eingriff eines Schaltfingers 18 einer Schaltwelle 19 auf, welche achsparallel zu den Getriebewellen und axial verschiebbar sowie drehbar im Getriebegehäuse angeordnet ist.

Die Schaltschiebemuffe 47 wird in der üblichen Weise durch eine Schaltgabel 48 betätigt, welche mit einer Schaltstange 49 bewegungsfest verbunden ist, die achsparallel zu den Getriebewellen und axial verschiebbar im Getriebegehäuse angeordnet ist. Die Schaltstange 49 ist mit einem Mitnehmer 52 einteilig ausgebildet, welcher eine Schaltnut 50 für den Eingriff eines Schaltfingers 51 der Schaltwelle 19 aufweist.

Die Schaltschiebemuffe 11 wird in der üblichen Weise durch eine Schaltgabel 23 über zwei Gleitsteine betätigt, welche mit einer Schaltschwinge 22 einteilig ausgebildet ist. Die Schaltschwinge 22 ist um eine geometrische Schwenkachse 21-21, welche senkrecht zu den Getriebewellen ausgerichtet ist, gegenüber dem Getriebegehäuse schwenkbar gelagert. Die Schaltschwinge 22 ist mit einem eine Schaltnut 24 für den Eingriff des Schaltfingers 18 aufweisenden Mitnehmer 25 bewegungsfest verbunden.

Die Schaltschiebemuffe 35 wird in der üblichen Weise durch eine Schaltgabel 36 über zwei Gleitsteine betätigt, welche mit einer Schaltschwinge 37 einteilig ausgebildet ist. Die Schaltschwinge 37 ist um eine geometrische Schwenkachse 9-9, welche senkrecht zu den Getriebewellen ausgerichtet ist, gegenüber dem Getriebegehäuse schwenkbar gelagert. Die Schaltschwinge 37 ist mit einem eine Schaltnut 38 für den Eingriff eines Schaltfingers 39 der Schaltwelle 19 aufweisenden Mitnehmer 40 bewegungsfest verbunden.

Die Schaltstange 15 weist eine der Schaltstange 49 zugekehrte Ausnehmung 28 für den Eingriff eines linearbeweglichen Sperrgliedes 26 auf. In der dem ausgerückten Zustand der Schaltschiebemuffe 10 entsprechenden Neutralstellung 30 der Schaltstange 15 steht die Ausnehmung 28 in Überdeckung mit einer senkrecht zur Schaltstange 15 ausgerichteten geometrischen Achse 27-27; welche quasi die Bewegungsbahn des Sperrgliedes 26 bildet, welches in einem bewegungsfest zum Getriebegehäuse angeordneten Sperrengehäuse 56 axial verschiebbar aufgenommen ist.

Die Ausnehmung 28 und das zugekehrte Ende 26-1 des Sperrgliedes 26 arbeiten über korrespondierende Neigungsflächen 29-15(26) und 29-26(15) so zusammen, daß bei einer Betätigung der Schaltstange 15 in deren dem eingerückten Zustand der Schaltschiebemuffe 10 entsprechende Gangstellung 15-R das Sperrglied 26 in der von der Schaltstange 15 weg weisenden Richtung der geometrischen Achse 27-27 betätigt wird und mit letzterer eine zugeordnete Sperrfläche SF-R der Schaltstange 15 in Überdeckung steht, welche eine entgegengesetzte Verlagerung des Sperrgliedes 26 blockiert.

In einer zur geometrischen Achse 27-27 senkrechten Gehäuseebene V-V des Getriebegehäuses ist ein schwenkbewegliches Sperrglied 32 angeordnet, welches an seinem einen Ende 32-1 eine Ausnehmung 31 aufweist und an seinem anderen Ende 32-2 durch ein Gelenk 33 mit der Schaltschwinge 22 schwenkbeweglich verbunden ist. Das die Ausnehmung 31 aufweisende eine Ende 32-1 des schwenkbeweglichen Sperrgliedes 32 ist durch den Lagerschild 59 so gelagert, daß der Schwenkbewegung um das Gelenk 33 eine Linearbewegung in den Richtungen einer geometrischen Achse 34-34 überlagert ist, welche zu der geometrischen Achse 27-27 etwa senkrecht ausgerichtet ist. In der dem ausgerückten Zustand der Schaltschiebemuffe 11 entsprechenden Neutralstellung 30 der Schaltschwinge 22 steht die Ausnehmung 31 des schwenkbeweglichen Sperrgliedes 32 in Überdeckung mit der geometrischen Achse 27-27 des linearbeweglichen Sperrgliedes 26. In der dem eingerückten Zustand der Schaltschiebemuffe 11 bezüglich des einen Zahnrades entsprechenden Gangstellung 22-3 der Schaltschwinge 22 steht eine zugeordnete Sperrfläche SF-3 des schwenkbeweglichen Sperrgliedes 32 mit der geometrischen Achse 27-27 in Überdeckung. In der dem eingerückten Zustand der Schaltschiebemuffe 11 bezüglich des anderen Zahnrades entsprechenden Gangstellung 22-4 der Schaltschwinge 22 steht eine zugeordnete Sperrfläche SF-4 des schwenkbeweglichen Sperrgliedes 32 mit der geometrischen Achse 27-27 in Überdeckung.

Das entgegengesetzt zur Schaltstange 15 liegende Ende 26-2 des linearbeweglichen Sperrgliedes 26 und die Ausnehmung 31 des schwenkbeweglichen Sperrgliedes 32 arbeiten unter Verwendung korrespondierender Neigungsflächen 29-26(32) einerseits und 29-32(3.)sowie 29-32(4.) andererseits und mit Zwischenschaltung einer Kugel 55 so zusammen, daß in der Gangstellung 15-R der Schaltstange 15 das schwenkbewegliche Sperrglied 32 durch das an der Sperrfläche SF-R abgestützte linearbewegliche Sperrglied 26 über die in die Ausnehmung 31 verdrängte Kugel 55 gegenüber dem Getriebegehäuse im wesentlichen unverrückbar festgelegt ist, während das linearbewegliche Sperrglied 26 mit seinem einen Ende 26-1 in die Ausnehmung 28 der Schaltstange 15 eingreift, wenn die Schaltschwinge 22 in einer ihrer beiden Gangstellungen 22-3 oder 22-4 steht und dadurch das schwenkbewegliche Sperrglied 32 mit seiner jeweiligen Sperrfläche SF-3 oder SF-4 die aus der Ausnehmung 31 verdrängte Kugel 55 abstützt, die ihrerseits das linearbewegliche Sperrglied 26 in seiner Sperrstellung in der Ausnehmung 28 hält.

Für den Fall, daß als Schaltmittel nur die Schaltstange 15 und die Schaltschwinge 22 verwendet sind oder eine weitere Schaltstange mit gegenseitiger Sperrwirkung gegenüber der Schaltstange 15 gemäß der DE 41 18 931 A1 vorgesehen ist, könnte die Kugel 55 in der von der Schaltstange 15 weg weisenden Richtung der geometrischen Achse 27-27 an einer Gehäusewand des Sperrengehäuses 56 abstützbar sein.

In einer zur Gehäuseebene V-V parallelen Gehäuseebene VI-VI des Getriebegehäuses ist ein zweites schwenkbewegliches Sperrglied 41 angeordnet, welches mit seinem einen Ende 41-1, an dem eine Ausnehmung 42 vorgesehen ist, in den Richtungen einer geometrischen Achse 43-43 verschiebbar gegenüber dem Sperrengehäuse 56 gelagert und an seinem anderen Ende 41-2 durch ein Gelenk 44 mit der Schaltschwinge 37 schwenkbeweglich verbunden ist. Die geometrische Achse 43-43 liegt senkrecht zu der geometrischen Achse 27-27 des Sperrgliedes 26. In der dem ausgerückten Zustand der zugehörigen Zahnradkupplungen entsprechenden Neutralstellung 30 der Schaltschwinge 37 steht die Ausnehmung 42 mit der geometrischen Achse 27-27 des linearbeweglichen Sperrgliedes 26 in Überdeckung. In der dem eingerückten Zustand der Schaltschiebemuffe 35 bezüglich des einen Zahnrades entsprechenden Gangstellung 37-5 der Schaltschwinge 37 steht eine zugeordnet Sperrfläche SF-5 des schwenkbeweglichen Sperrgliedes 41 mit der geometrischen Achse 27-27 des linearbeweglichen Sperrgliedes 26 in Überdeckung. In der dem eingerückten Zustand der Schaltschiebemuffe 35 bezüglich des anderen Zahnrades entsprechenden Gangstellung 37-6 der Schaltschiebemuffe 37 steht eine zugeordnete Sperrfläche SF-6 des schwenkbeweglichen Sperrgliedes 41 mit der geometrischen Achse 27-27 des linearbeweglichen Sperrgliedes 26 in Überdeckung.

Das zweite schwenkbewegliche Sperrglied 41 arbeitet mit dem ersten linearbeweglichen Sperrglied 26 über ein zweites linearbewegliches Sperrglied 45 zusammen, welches ebenfalls in dem Sperrengehäuse 56 aufgenommen und in letzterem entlang der geometrischen Achse 27-27 für die Bewegungen des ersten linearbeweglichen Sperrgliedes 26 verschiebbar geführt ist. Das zweite linearbewegliche Sperrglied 45 - dessen Erstreckung in den Richtungen der Achse 27-27 etwa dem gegenseitigen Abstand der Gehäuseebenen V-V und VI-VI entspricht - ist an seinem der Schaltstange 15 zugekehrten Ende sowohl mit Neigungsflächen 29-45(32) für den Eingriff in die Ausnehmung 31 des ersten schwenkbeweglichen Sperrgliedes 32 (über die betreffende Kugel 55) als auch mit einer achsnormalen Anschlagfläche 46-45(26) für die gegenseitige Abstützung mit dem ersten linearbeweglichen Sperrglied 26 versehen. Das zweite linearbewegliche Sperrglied 45 ist an seinem entgegengesetzt zur Schaltstange 15 liegenden Ende sowohl mit Neigungsflächen 29-45(41) für den Eingriff in die mit korrespondierenden Neigungsflächen 29-41(5.) und 29-41(6.) versehene Ausnehmung 42 des zweiten schwenkbeweglichen Sperrgliedes 41 wiederum unter Zwischenschaltung einer Kugel 55 als auch mit einer achsnormalen Anschlagfläche 46-45(54) versehen.

Das zweite schwenkbewegliche Sperrglied 41 arbeitet mit dem zweiten linearbeweglichen Sperrglied 45 so zusammen, daß in den Gangstellungen 37-5 und 37-6 der zweiten Schaltschwinge 37 jeweils das durch die aus der Ausnehmung 42 herausgedrängte Kugel 55 betätigte zweite linearbewegliche Sperrglied 45 einerseits über seine Neigungsflächen 29-45(32) in die Ausnehmung 31 des ersten schwenkbeweglichen Sperrgliedes 32 über die betreffende Kugel 55 eingreift sowie andererseits über seine achsnormale Anschlagfläche 46-45(26) das erste linearbewegliche Sperrglied 26 in dessen Endstellung für den Eingriff in die Ausnehmung 28 der Schaltstange 15 hält.

Das zweite schwenkbewegliche Sperrglied 41 arbeitet mit dem zweiten linearbeweglichen Sperrglied 45 weiterhin so zusammen, daß in der Gangstellung 15-R der Schaltstange 15 das zweite linearbewegliche Sperrglied 45 über die benachbarte Anschlagfläche 46-26(45) des ersten linearbeweglichen Sperrgliedes 26 in seine Endstellung für den Eingriff in die Ausnehmung 42 des zweiten schwenkbeweglichen Sperrgliedes 41 über die betreffenden Schrägflächen 29-45(41) und die zwischengeschaltete Kugel 55 betätigt ist.

Das zweite schwenkbewegliche Sperrglied 41 arbeitet mit dem zweiten linearbeweglichen Sperrglied 45 schließlich noch so zusammen, daß in den Gangstellungen 22-3 und 22-4 der ersten Schaltschwinge 22 die aus der Ausnehmung 31 des ersten schwenkbeweglichen Sperrgliedes 32 herausgedrängte Kugel 55 das zweite linearbewegliche Sperrglied 45 über dessen benachbarte Neigungsflächen 29-45(32) in die Endstellung für den Eingriff in die Ausnehmung 42 des zweiten schwenkbeweglichen Sperrgliedes 41 über die zugehörigen Neigungsflächen 29-45(41) und die zwischengeschaltete Kugel 55 betätigt.

Für den Fall, daß als Schaltmittel nur die Schaltstange 15 und die Schaltschwingen 22 und 37 verwendet sind oder eine weitere Schaltstange mit gegenseitiger Sperrwirkung gegenüber der Schaltstange 15 gemäß der DE 41 18 931 A1 vorgesehen ist, könnte die der Ausnehmung 42 zugeordnete Kugel 55 in der von der Schaltstange 15 weg weisenden Richtung an einer Gehäusewand des Sperrengehäuses 56 abstützbar sein.

Der zweiten Schaltstange 49 ist ein linearbewegliches Sperrglied 54 zugeordnet, welches zusätzlich in dem Sperrengehäuse 56 entlang der geometrischen Achse 27-27 verschiebbar aufgenommen ist, und dessen Erstreckung in Richtungen der Achse 27-27 im wesentlichen dem Abstand zwischen der Gehäuseebene VI-VI und einer Ausnehmung 53 der Schaltstange 49 entspricht. Das der Schaltstange 49 zugeordnete linearbewegliche Sperrglied 54 weist an seinem der Schaltstange 15 zugekehrten Ende sowohl Neigungsflächen 29-54(41) für den Eingriff in die Ausnehmung 42 des zweiten schwenkbeweglichen Sperrgliedes 41 über die betreffende Kugel 55 als auch eine achsnormale Anschlagfläche 46-54(45) für die gegenseitige Abstützung mit dem zugekehrten Ende des zweiten linearbeweglichen Sperrgliedes 45 auf. Das der zweiten Schaltstange 49 zugehörige linearbewegliche Sperrglied 54 weist an seinem der Schaltstange 49 zugekehrten Ende Neigungsflächen 29-54(49) auf, welche mit korrespondierenden Neigungsflächen 29-49(54) der Ausnehmung 53 zusammenarbeiten.

In der dem ausgerückten Zustand der Schaltschiebemuffe 47 entsprechenden Neutralstellung 30 der Schaltstange 49 steht die Ausnehmung 53 mit der geometrischen Achse 27-27 des ersten linearbeweglichen Sperrgliedes 26 in Überdeckung. In der dem eingerückten Zustand der Schaltschiebemuffe 47 bezüglich des einen Zahnrades entsprechenden Gangstellung 49-1 der Schaltstange 49 steht eine zugeordnete Sperrfläche SF-1 der Schaltstange 49 mit der geometrischen Achse 27-27 für die Bewegungen der linearbeweglichen Sperrglieder 26, 45 und 54 in Überdeckung. In der dem eingerückten Zustand der Schaltschiebemuffe 47 bezüglich des anderen Zahnrades entsprechenden Gangstellung 49-2 der Schaltstange 49 steht eine zugeordnete Sperrfläche SF-2 der Schaltstange 49 mit der geometrischen Achse 27-27 für die Bewegungen der linearbeweglichen Sperrglieder 26, 45 und 54 in Überdeckung.

Die Sperrglieder 41, 45 und 54 arbeiten wie folgt zusammen:

In der Endstellung des linearbeweglichen Sperrgliedes 45 für den Eingriff in die Ausnehmung 42 des schwenkbeweglichen Sperrgliedes 41 ist das linearbewegliche Sperrglied 54 durch die benachbarte Anschlagfläche 46-45(54) des linearbeweglichen Sperrgliedes 45 in seine Endstellung für den Eingriff in die Ausnehmung 53 der Schaltstange 49 betätigt.

In den Gangstellungen 49-1 und 49-2 der Schaltstange 49 ist das zugehörige linearbewegliche Sperrglied 54 über die betreffende Neigungsfläche 29-49(54) der Ausnehmung 53 in seine Endstellung für den Eingriff in die Ausnehmung 42 des schwenkbeweglichen Sperrgliedes 41 über die betreffende Kugel 55 betätigt, wobei in dieser Endstellung die Anschlagfläche 46-54(45) des linearbeweglichen Sperrgliedes 54 das linearbewegliche Sperrglied 45 in dessen Endstellung für den Eingriff in die Ausnehmung 31 des schwenkbeweglichen Sperrgliedes 32 über die betreffende andere Kugel 55 betätigt hat oder hält.

Im übrigen ist die Anordnung in bekannter Weise noch so getroffen, daß die Betätigung einer Schaltstange oder Schaltschwinge in eine Gangstellung nur dann möglich ist, wenn alle Schaltstangen und alle Schaltschwingen in ihrer Neutralstellung stehen.

Weiterhin ist die Ausgestaltung der Neigungsflächen 29 relativ zur geometrischen Achse 27-27 in bekannter Weise so getroffen, daß Längsbewegungen von Neigungsflächen 29 in den Richtungen der Drehachse 12-12 zu Längsbewegungen der Sperrglieder 26, 45 und 54 in den Richtungen der Achse 27 -27 führen.

Die Schaltstangen 15 und 49 sind in jeweils einem Linearlager 7 bzw. 8 verschiebbar gelagert, welches an einem Lagerschild 59 gehaltert ist, der in einer zu den Drehachsen 12-12 und 13-13 senkrechten Gehäuseebene des Getriebegehäuses sowie oberhalb der Getriebewellen angeordnet und über seitliche Befestigungsstellen 60 und 61 gegenüber korrespondierenden gehäuseinneren Befestigungsstellen des Getriebegehäuses unbeweglich festlegbar ist.

Der Lagerschild 59 ist Bestandteil eines Schaltgehäuseeinsatzes 14, zu welchem auch beiderseits der Schaltschwingen 22 und 37 angeordnete Lagerkonsolen 62 und 63 gehören, welche an ihren vorderen Enden durch zapfenartige Ansätze 62-1 und 63-1 gegenüber dem Getriebegehäuse und an ihren hinteren Enden einerseits durch Befestigungswinkel 62-2 und 63-2 gegenüber dem Getriebegehäuse und andererseits durch Ansätze 62-3 und 63-3 gegenüber dem Lagerschild 59 fixierbar sind.

Gegenüber den Lagerkonsolen 62 und 63 sind jeweils die beiden Lagerbolzen 64 für die schwenkbare Lagerung der Schaltschwingen 22 und 37 feststehend angeordnet.

Das Sperrengehäuse 56 weist ein am Lagerschild 59 befestigtes Teilgehäuse 57 auf, welches im Querschnitt U-förmig ausgebildet ist und die kastenförmigen linearbeweglichen Sperrglieder 26, 45 und 54 auf drei Seiten formschlüssig umschließt. Das Teilgehäuse 57 ist an seiner den schwenkbeweglichen Sperrgliedern 32 und 41 zugekehrten Seite mit je einem Schlitz 57-1 für den Durchgang einer der Kugeln 55 versehen, der mittig zu der jeweiligen Gehäuseebene V-V und VI-VI für die Anordnung des zugehörigen schwenkbeweglichen Sperrgliedes 32 bzw. 41 liegt.

Das Teilgehäuse 57 weist zwei Paar Führungsstege 58-58 auf, welche jeweils symmetrisch zu einer der Gehäuseebenen V-V und VI-VI sowie beiderseits des jeweiligen schwenkbeweglichen Sperrgliedes 32 bzw. 41 zu dessen Führung in den Richtungen senkrecht zu der Achse 27-27 angeordnet sind. Diese Führungsstege 58 gehen von dem jeweiligen Schlitz 57-1 aus, wodurch die betreffende Kugel 55 verliersicher im Sperrengehäuse 56 aufgenommen ist, welches auf der offenen Seite des Teilgehäuses 57 durch den Lagerschild 59 abgeschlossen ist.

## Patentansprüche

1. Schaltvorrichtung für ein Zahnräderwechselgetriebe mit zwei Zahnradkupplungen jeweils zum Ankuppeln eines Zahnrades an seine Getriebewelle, mit einer achsparallel zu den Getriebewellen angeordneten und axial verschiebbar gegenüber einem Getriebegehäuse gelagerten Schaltstange (15), zu welcher sowohl eine Schaltgabel (16) zum Betätigen der einen Zahnradkupplung als auch ein eine Schaltnut (17) für den Eingriff eines Schaltfingers (18) einer Schaltwelle (19) aufweisender Mitnehmer (20) bewegungsfest angeordnet sind, mit einer um eine zu den Getriebewellen senkrecht ausgerichtete geometrische Schwenkachse (21-21) schwenkbar gegenüber dem Getriebegehäuse gelagerten Schaltschwinge (22), zu welcher sowohl eine Schaltgabel (23) zum Betätigen der anderen Zahnradkupplung als auch ein eine Schaltnut (24) für den Eingriff eines Schaltfingers (18) der Schaltwelle (19) aufweisender Mitnehmer (25) bewegungsfest angeordnet sind, mit einem linearbeweglichen Sperrglied (26), in den Richtungen einer senkrecht zur Schaltstange (15) ausgerichteten geometrischen Achse (27-27) axial verschiebbar gegenüber dem Getriebegehäuse gelagert ist und mit seinem einen Ende (26-1) mit einer Ausnehmung (28) der Schaltstange (15) unter Verwendung von Neigungsflächen (29-15, 29-26(15)) so zusammenarbeitet, daß einerseits in der dem ausgerückten Zustand der zugehörigen Zahnradkupplung entsprechenden Neutralstellung der Schaltstange (15) deren Ausnehmung (28) und die geometrische Achse (27-27) für die Bewegung des Sperrgliedes (26) in Überdeckung stehen, wodurch das Sperrglied (26) in der auf die Schaltstange (15) weisenden Richtung seiner einen Endstellung betätigbar ist, in welcher Schaltstange (15) über ihre Ausnehmung (28) über das Sperrglied (26) gegenüber dem Getriebegshäuse im wesentlichen unverrückbar festlegbar ist, und andererseits durch eine Betätigung der in der Neutralstellung stehenden Schaltstange (15) zum Einrücken der zugehörigen einen Zahnradkupplung das linearbewegliche Sperrglied (26) durch die Wirkung der Neigungsflächen (29-15, 29-26(15)) in der von der Schaltstange (15) weg weisenden Richtung seiner anderen Endstellung verlagerbar ist, in welcher das linearbewegliche Sperrglied (26) mit seinem anderen Ende (26-2) mit einer Ausnehmung (31) an dem einen Ende eines weiteren Sperrgliedes (32) in Eingriff bringbar ist, welches in einer zur geometrischen Achse (27-27) für die Bewegungen des linearbeweglichen Sperrgliedes (26) senkrechten Gehäuseebene des Getriebegehäuses schwenkbeweglich angeordnet und über ein Gelenk (33) an seinem anderen Ende mit der Schaltschwinge (22) so bewegungsabhängig verbunden ist, daß einerseits in der dem ausgerückten Zustand der zugehörigen anderen Zahnradkupplung entsprechenden Neutralstellung der Schaltschwinge (22) die Ausnehmung (31) des schwenkbeweglichen Sperrgliedes (32) und die geometrische Achse (27-27) für die Bewegungen des linearbeweglichen Sperrgliedes (26) in Überdeckung stehen, und andererseits in der dem eingerückten Zustand der zugehörigen anderen Zahnradkupplung entsprechenden Gangstellung der Schaltschwinge (22) die geometrische Achse (27-27) für die Bewegungen des linearbeweglichen Sperrgliedes (26) und eine Sperrfläche (SF-4) des schwenkbeweglichen Sperrgliedes (32) in Überdeckung stehen, wodurch eine Betätigung des linearbeweglichen Sperrgliedes (26) in dessen Endstellung für den Eingriff in die Ausnehmung (31) des schwenkbeweglichen Sperrgliedes (32) blockiert ist, und bei der in der dem eingerückten Zustand der zugehörigen einen Zahnradkupplung entsprechenden Gangstellung der Schaltstange (15) die geometrische Achse (27-27) für die Bewegung des linearbeweglichen Sperrgliedes (26) und eine Sperrfläche (SF-R) der Schaltstange (15) in Überdeckung stehen, wodurch eine Betätigung des linearbeweglichen Sperrgliedes (26) in dessen Endstellung für den Eingriff in die Ausnehmung (28) der Schaltstange (15) blokkiert ist, und bei der die Ausnehmung (31) des schwenkbeweglichen Sperrgliedes (32) und das zugehörige Ende (26-2) des liniearbeweglichen Sperrgliedes (26) über Neigungsflächen (29-26(32), 29-32) so zusammenarbeiten, daß durch eine Betätigung der Schaltschwinge (22) in die Gangstellung das linearbewegliche Sperrglied (26) zwangsläufig über die Ausnehmung (31) des schwenkbeweglichen Sperrgliedes (32) in seine Endstellung für den Eingriff in die Ausnehmung (28) der Schaltstange (15) betätigt wird,
**dadurch gekennzeichnet,** daß das schwenkbewegliche Sperrglied (32) mit seinem die Ausnehmung (31) aufweisenden einen Ende (32-1) zusätzlich in den Richtungen einer geometrischen Achse (34-34) verschiebbar gegenüber dem Getriebegehäuse (14) angeordnet und durch das Gelenk (33) an seinem anderen Ende (32-2) direkt und ausschließlich schwenkbeweglich mit der Schaltschwinge (22) verbunden ist sowie die geometrischen Achsen (27-27 und 34-34) für die Bewegungen der beiden Sperrglieder (26 und 32) zueinander senkrecht liegen.

2. Schaltvorrichtung nach Anspruch 1,
**dadurch gekennzeichnet,**
daß eine zusätzliche dritte Zahnradkupplung zum Ankuppeln eines Zahnrades an seine Getriebewelle vorgesehen ist, daß eine Schaltgabel (36) und eine zweite Schaltschwinge (37) - welche um eine zu den Getriebewellen senkrecht ausgerichtet Schwenkachse (9-9) gegenüber dem Getriebegehäuse (14) schwenkbar gelagert ist - sowie ein eine Schaltnut (38) für den Eingriff eines Schaltfingers (39) der Schaltwelle (19) aufweisender Mitnehmer (40) sowohl zur Betätigung der dritten Zahnradkupplung verwendet als auch bewegungsfest zueinander angeordnet sind, daß ein zweites schwenkbewegliches Sperrglied (41) in einer Gehäuseebene (VI-VI) des Getriebegehäuses (14) angeordnet ist, welche auf der geometrischen Achse (27-27) für die Bewegungen des linearbeweglichen Sperrgliedes (26) senkrecht steht, daß das eine Ende (41-1) des zweiten schwenkbeweglichen Sperrgliedes (41) sowohl eine mit Neigungsflächen (29-41(5.) und 29-41(6.)) versehene Ausnehmung (42) aufweist als auch zusätzlich in den Richtungen einer geometrischen Achse (43-43), welche zu der geometrischen Achse (27-27) für die Bewegungen des liniearbeweglichen Sperrgliedes (26) senkrecht liegt, verschiebbar gegenüber dem Getriebegehäuse (14) angeordnet ist, daß das andere Ende (41-2) des zweiten schwenkbeweglichen Sperrgliedes (41) durch ein Gelenk (44) mit der zweiten Schaltschwinge (37) direkt und ausschließlich schwenkbeweglich verbunden ist, daß in der dem ausgerückten Zustand der zugehörigen dritten Zahnradkupplung entsprechenden Neutralstellung (30) der zweiten Schaltschwinge (37) die Ausnehmung (42) an dem einen Ende (41-1) des zweiten schwenkbeweglichen Sperrgliedes (41) mit der geometrischen Achse (27-27) für die Bewegungen des linearbeweglichen Sperrgliedes (26) in Überdeckung steht, daß in der dem eingerückten Zustand der zugehörigen dritten Zahnradkupplung entsprechenden Gangstellung (37-5 oder 37-6) der zweiten Schaltschwinge (37) eine Sperrfläche (SF-5 oder SF-6) des zweiten schwenkbeweglichen Sperrgliedes (41) mit der geometrischen Achse (27-27) für die Bewegungen des linearbeweglichen Sperrgliedes (26) in Überdeckung steht, daß zusätzlich ein zweites linearbewegliches Sperrglied (45) vorgesehen und entlang der geometrischen Achse (27-27) für die Bewegungen des ersten linearbeweglichen Sperrgliedes (26) gegenüber dem Getriebegehäuse (14) verschiebbar geführt ist, daß die Erstreckung des zweiten linearbeweglichen Sperrgliedes (45) in den Richtungen der geometrischen Achse (27-27) für die Bewegungen der linearbeweglichen Sperrglieder (26 und 45) dem Abstand zwischen den beiden Gehäuseebenen (V-V und VI-VI) für die Anordnung der schwenkbeweglichen Sperrglieder (32 und 41) entspricht, daß die beiden linearbeweglichen Sperrglieder (26 und 45) über achsnormale Anschlagflächen (46-26(45)und 46-45(26)) an ihren einander zugekehrten Enden gegeneinander abstützbar sind, daß das zweite linearbewegliche Sperrglied (45) an seinem dem ersten linearbeweglichen Sperrglied (26) zugekehrten Ende mit der Ausnehmung (31) des ersten schwenkbeweglichen Sperrgliedes (32) zusammenarbeitende Neigungsflächen (29-45(32)) aufweist, daß das zweite linearbewegliche Sperrglied (45) an seinem zu dem ersten linearbeweglichen Sperrglied (26) entgegengesetzt liegenden Ende mit der Ausnehmung (42) des zweiten schwenkbeweglichen Sperrgliedes (41) zusammenarbeitende Neigungsflächen (29-45(41)) aufweist, und daß die Anordnung noch so getroffen ist, daß bei einem Einrücken der zugehörigen einen Zahnradkupplung über die Schaltstange (15) das zweite linearbewegliche Sperrglied (45) über die achsnormalen Anschlagflächen (46-26(45)und 46-45(26)) zwangsläufig in seine eine Endstellung verlagert wird, in welcher sein zu dem ersten linearbeweglichenSperrglied (26) entgegengesetzt liegendes Ende in die Ausnehmung (42) des zweiten schwenkbeweglichen Sperrgliedes (41) eingreift, daß bei einem Einrücken der zugehörigen anderen Zahnradkupplung über die erste Schaltschwinge (22) das zweite linearbewegliche Sperrglied (45) durch die Neigungsflächen (29-32(3.)und 29-32(4.)) an der Ausnehmung (31) des ersten schwenkbeweglichen Sperrgliedes (32) zwangsläufig in seine eine Endstellung verlagert wird, in welcher sein zu dem ersten linearbeweglichen Sperrglied (26) entgegengesetzt liegendes Ende in die Ausnehmung (42) des zweiten schwenkbeweglichen Sperrgliedes (41) eingreift, und daß bei einem Einrücken der zusätzlichen dritten Zahnradkupplung über die zweite Schaltschwinge (37) das zweite linearbewegliche Sperrglied (45) über die Neigungsflächen (29-41(5.)und 29-41(6.)) der Ausnehmung (42) des zweiten schwenkbeweglichen Sperrgliedes (41) zwangsläufig in seine andere Endstellung verlagert wird, in welcher das erste linearbewegliche Sperrglied (26) durch die Anschlagflächen (46-26(45) und 46-45(26)) zwangsläufig in seine eine Endstellung für den Eingriff seines benachbarten Endes (26-1) in die Ausnehmung (28) der Schaltstange (15) betätigt ist und das zweite linearbewegliche Sperrglied (45) mit seinem dem ersten linearbeweglichen Sperrglied (26) zugekehrten Ende in die Ausnehmung (31) des ersten schwenkbeweglichen Sperrgliedes (32) eingreift.

3. Schaltvorrichtung nach Anspruch 1 oder 2,
**dadurch gekennzeichnet,**
daß eine zusätzliche vierte Zahnradkupplung zum Ankuppeln eines Zahnrades an seine Getriebewelle vorgesehen ist, daß eine Schaltgabel (48) und eine achsparallel zu den Getriebewellen und axial verschiebbar gegenüber dem Getriebegehäuse (14) angeordnete zusätzliche zweite Schaltstange (49) und ein eine Schaltnut (50) für den Eingriff eines Schaltfingers (51) der Schaltwelle (19) aufweisender Mitnehmer (52) sowohl zur Betätigung der vierten Zahnradkupplung verwendet als auch zueinander bewegungsfest angeordnet sind, daß die zweite Schaltstange (49) eine mit Neigungsflächen (29-49(54)) versehene Ausnehmung (53) aufweist daß in der dem ausgerückten Zustand der vierten Zahnradkupplung entsprechenden Neutralstellung (30) der zweiten Schaltstange (49) die geometrische Achse (27-27) für die Bewegungen des ersten linearbeweglichen Sperrgliedes (26) und die Ausnehmung (53) der zweiten Schaltstange (49) in Überdeckung stehen, daß die zweite Schaltstange (49) eine Sperrfläche (SF-1 oder SF-2) aufweist, daß in der dem eingerückten Zustand der vierten Zahnradkupplung entsprechenden Gangstellung (49-1 oder 49-2) der zweiten Schaltstange (49) die geometrische Achse (27-27) für die Bewegungen des ersten linearbeweglichen Sperrgliedes (26) und die zugeordnete Sperrfläche (SF-1 oder SF-2) der zweiten Schaltstange (49) in Überdeckung stehen, daß ein zusätzliches, der zweiten Schaltstange (49) zugehöriges linearbewegliches Sperrglied (54) vorgesehen und entlang der geometrischen Achse (27-27) für die Bewegungen des ersten linearbeweglichen Sperrgliedes (26) axial verschiebbar gegenüber dem Getriebegehäuse (14) geführt ist, daß die Erstreckung des der zweiten Schaltstange (49) zugehörigen linearbeweglichen Sperrgliedes (54) dem Abstand zwischen der Ausnehmung (53) der zweiten Schaltstange (49) und der Gehäuseebene (V-V oder VI-VI) für die Anordnung des ersten oder zweiten schwenkbeweglichen Sperrgliedes (32 oder 41) entspricht, daß das der zweiten Schaltstange (49) zugehörige linearbewegliche Sperrglied (54) mit seinem dem ersten linearbeweglichen Sperrglied (26) zugekehrten Ende über achsnormale Anschlagflächen (46-54(45)) an dem zugekehrten Ende des ersten oder zweiten linearbeweglichen Sperrgliedes (26 oder 45) abstützbar ist, daß das dem ersten linearbeweglichen Sperrglied (26) zugekehrte Ende des der zweiten Schaltstange (49) zugehörigen linearbeweglichen lichen Sperrgliedes (54) mit Neigungsflächen (29-54(41))versehen ist, welche mit den Neigungsflächen (29-32(3.),29-32(4.)oder 29-41(5.),29-41(6.)) der Ausnehmung (31 oder 42) des ersten oder zweiten schwenkbeweglichen Sperrgliedes (32 oder 41) zusammenarbeiten, daß das entgegengesetzt zu dem ersten linearbeweglichen Sperrglied (26) liegende Ende des der zweiten Schaltstange (49) zugeordneten linearbeweglichen Sperrgliedes (54) mit Neigungsflächen (29-54(49)) versehen ist, welche mit den Neigungsflächen (29-49(54)) der Ausnehmung (53) der zweiten Schaltstange(49) zusammenarbeiten, daß das der zweiten Schaltstange (49) zugehörige linearbewegliche Sperrglied (54) in seiner einen Endstellung über seine achsnormale Anschlagfläche (46-54(45)) das erste linearbewegliche Sperrglied (26) entweder direkt oder über das zweite linearbewegliche Sperrglied (45) in dessen dem Eingriff in die Ausnehmung (28) der ersten Schaltstange (15) entsprechende eine Endstellung zwangsläufig verlagert hat und mit seinem dem ersten linearbeweglichen Sperrglied (26) zugekehrten Ende in die Ausnehmung (31 oder 42) des ersten oder zweiten schwenkbeweglichen Sperrgliedes (32 oder 41) eingreift, daß das der zweiten Schaltstange (49) zugehörige linearbewegliche Sperrglied (54) in seiner anderen Endstellung mit seinem zu dem ersten linearbeweglichen Sperrglied (26) entgegengesetzt liegenden Ende in die Ausnehmung (53) der zweiten Schaltstange (49) eingreift, und daß die Anordnung so getroffen ist, daß beim Einrücken der vierten Zahnradkupplung über die zweite Schaltstange (49) das zugehörige linearbewegliche Sperrglied (54) zwangsläufig in seine eine Endstellung unter der Wirkung der Neigungsflächen (29-49(54)und 29-54(49)) der Ausnehmung (53) der zweiten Schaltstange (49) und des entgegengesetzt zu dem ersten linearbeweglichen Sperrglied (26) liegenden Endes des der zweiten Schaltstange (49) zugehörigen zweiten linearbeweglichen Sperrgliedes (54) verlagert wird und in der dem eingerückten Zustand der vierten Zahnradkupplung entsprechenden Gangstellung (49-1 oder 49-2) der zweiten Schaltstange (49) eine Verlagerung des der zweiten Schaltstange (49) zugehörigen linearbeweglichen Sperrgliedes (54) in seine andere Endstellung durch die Sperrfläche (SF-1 oder SF-2) der zweiten Schaltstange (49) blockiert ist, und daß die Anordnung noch so getroffen ist, daß beim Einrücken der einen Zahnradkupplung die Ausnehmung (28) der ersten Schaltstange (15) das erste linearbewegliche Sperrglied (26) über die zugeordneten Neigungsflächen (29-15(26)und 29-26(15)) zwangsläufig in seine andere Endstellung für den Eingriff in die Ausnehmung (31) des ersten schwenkbeweglichen Sperrgliedes (32) und somit über die achsnormalen Anschlagflächen (46-26(45), 46-45(26),46-45(54)und 46-54(45)) zwangsläufig auch das der zweiten Schaltstange (49) zugehörige linearbewegliche Sperrglied (54) in seine andere Endstellung verlagert, und daß die Anordnung weiterhin so getroffen ist, daß beim Einrücken der anderen Zahnradkupplung die Ausnehmung (31) des ersten schwenkbeweglichen Sperrgliedes (32) das der zweiten Schaltstange (49) zugehörige linearbewegliche Sperrglied (54) über die zugeordneten Neigungsflächen (29-32(3.),29-32(4.),29-54(41)) direkt oder über die zugeordneten Neigungsflächen (29-45(32)) des zweiten linearbeweglichen Sperrgliedes (45) und die achsnormalen Anschlagflächen (46-45(54)und 46-54(45)) des zweiten linearbeweglichen Sperrgliedes (45) und des der zweiten Schaltstange (49) zugehörigen linearbeweglichen Sperrgliedes (54) zwangsläufig in seine andere Endstellung betätigt, und daß die Anordnung schließlich noch so getroffen ist, daß beim Einrücken der dritten Zahnradkupplung die Ausnehmung (42) des zweiten schwenkbeweglichen Sperrgliedes (41) das der zweiten Schaltstange (49) zugehörige linearbewegliche Sperrglied (54) unter der Wirkung der zugeordneten Neigungsflächen (29-41(5.), 29-41(6.) und 29-54(41)) zwangsläufig in seine andere Endstellung für den Eingriff in die Ausnehmung (53) der zweiten Schaltstange (49) betätigt.

4. Schaltvorrichtung nach einem der Ansprüche 1 bis 3,
**dadurch gekennzeichnet,**
daß die einem schwenkbeweglichen Sperrglied (32 oder 41) zugehörigen Neigungsflächen (29-32(3.),29-32(4.)oder 29-41(5.),29-41(6.)) über eine Kugel (55) mit einem linearbeweglichen Sperrglied (26 oder 45 oder 54) zugehörigen Neigungsflächen (29-26(32)oder 29-45(32)oder 29-45(41)oder 29-54(41)) zusammenarbeiten.

5. Schaltvorrichtung nach einem der Ansprüche 1 bis 4,
**dadurch gekennzeichnet,**
daß wenigstens ein linearbewegliches Sperrglied (26 oder 45 oder 54) als ein kastenförmiges Blechpreßteil ausgebildet ist.

6. Schaltvorrichtung nach Anspruch 5,
**dadurch gekennzeichnet,**
daß die linearbeweglichen Sperrglieder (26, 45, 54) in einem kastenförmigen Sperrengehäuse (56) mit Bewegungsspiel formschlüssig aufgenommen sind.

7. Schaltvorrichtung nach Anspruch 6,
**dadurch gekennzeichnet,**
daß das Sperrengehäuse (56) Mittel zur verliersicheren Aufnahme wenigstens einer Kugel (55) aufweist.

8. Schaltvorrichtung Anspruch 6 oder 7,
**dadurch gekennzeichnet,**
daß das Sperrengehäuse (56) ein die linearbeweglichen Sperrglieder (26, 45, 54) jeweils an drei Seiten umschließendes U-förmiges Teilgehäuse (57) aufweist.

9. Schaltvorrichtung nach Anspruch 8,
**dadurch gekennzeichnet,**
daß das Teilgehäuse (57) beiderseits eines schwenkbeweglichen Sperrgliedes (32 oder 41) angeordnete Führungsstege (58) aufweist.

10. Schaltvorrichtung nach einem der Ansprüche 6 bis 9,
**dadurch gekennzeichnet,**
daß das Sperrengehäuse (56) an einem bewegungsfest gegenüber dem Getriebegehäuse (14) angeordneten Lagerschild (59) gehaltert ist.

11. Schaltvorrichtung nach einem der Ansprüche 6 bis 10,
**dadurch gekennzeichnet,**
daß das Sperrengehäuse (56) mit den linearbeweglichen Sperrgliedern (26, 45, 54) eine vormontierbare Baueinheit bildet.

## Claims

1. Shift actuator for a change-speed gearbox with two gearwheel clutches, each intended for coupling a gearwheel to its gearbox shaft, with a shift rod (15), which is arranged parallel to the axis of the gearbox shafts, is mounted in an axially displaceable manner relative to a gearbox housing and relative to which both a shift fork (16) for actuating one gearwheel clutch and a driver element (20) having a shift slot (17) for the engagement of a shift finger (18) of a shifting shaft (19) are arranged fixed in terms of motion, with a shift rocker (22), which is mounted in such a way about a geometric pivoting axis (21-21) aligned perpendicular to the gearbox shafts, that it is pivotable relative to the gearbox housing and relative to which both a shift fork (23) for actuating the other gearwheel clutch and a driver element (25) having a shift slot (24) for the engagement of a shift finger (18) of the shifting shaft (19) are arranged fixed in terms of motion, with a blocking member (26) capable of linear motion, which is mounted in such a way as to be displaceable axially relative to the gearbox housing in the directions of a geometric axis (27-27) aligned perpendicular to the shift rod (15) and, with one end (26-1), interacts in such a way with a recess (28) in the shift rod (15), by means of inclined surfaces (29-15, 29-26 (15)), that, on the one hand, in the neutral position of the shift rod (15) corresponding to the disengaged state of the associated gearwheel clutch, the recess (28) in the said shift rod and the geometric axis (27-27) for the movement of the blocking member (26) overlap, thereby allowing the blocking member (26) to be actuated in the direction of its one end position, the direction of the shift rod (15), in which end position the shift rod (15) can be fixed essentially immovably relative to the gearbox housing by means of its recess (28) and of the blocking member (26), and, on the other hand, by actuation of the neutrally positioned shift rod (15) for engagement of the associated one gearwheel clutch, the blocking member (26) capable of linear motion can be displaced by the action of the inclined surfaces (29-15, 29-26 (15)) away from the shift rod (15) in the direction of its other end position, in which the blocking member (26) capable of linear motion can be brought by its other end (26-2) into engagement with a recess (31) at the one end of another blocking member (32), which is arranged pivotably in a gearbox-housing plane perpendicular to the geometric axis (27-27) for the movements of the blocking member (26) capable of linear motion and is connected in a motion-dependent manner, by means of a joint (33) at its other end, to the shift rocker (22) in such a way that, on the one hand, in the neutral position of the shift rocker (22) corresponding to the disengaged state of the associated other gearwheel clutch, the recess (31) in the pivotable blocking member (32) and the geometric axis (27-27) for the movements of the blocking member (26) capable of linear motion overlap and, on the other hand, in the gear position of the shift rocker (22) corresponding to the engaged state of the associated other gearwheel clutch, the geometric axis (27-27) for the movements of the blocking member (26) capable of linear motion and a blocking surface (SF-4) of the pivotable blocking member (32) overlap, thereby blocking actuation of the blocking member (26) capable of linear motion into its end position for engagement in the recess (31) in the pivotable blocking member (32), and in which, in the gear position of the shift rod (15) corresponding to the engaged state of the associated one gearwheel clutch, the geometric axis (27-27) for the movement of the blocking member (26) capable of linear motion and a blocking surface (SF-R) of the shift rod (15) overlap, thereby blocking actuation of the blocking member (26) capable of linear motion into its end position for engagement in the recess (28) in the shift rod (15), and in which the recess (31) in the pivotable blocking member (32) and the associated end (26-2) of the blocking member (26) capable of linear motion interact in such a way via inclined surfaces (29-26 [illegible] 32) that actuation of the shift rocker (22) into the gear position necessarily actuates the blocking member (26) capable of linear motion, by means of the recess (31) in the pivotable blocking member (32), into its end position for engagement in the recess (28) in the shift rod (15), characterized in that by means of its one end (32-1), the end having the recess (31), the pivotable blocking member (32) is additionally arranged in such a way as to be displaceable relative to the gearbox housing (14) in the directions of a geometric axis (34-34) and is connected to the shift rocker (22) directly and in an exclusively pivotable manner by the joint (33) at its other end (32-2), and the geometric axes (27-27 and 34-34) for the movements of the two blocking members (26 and 32) are perpendicular to one another.

2. Shift actuator according to Claim 1, characterized in that an additional third gearwheel clutch is provided for coupling a gearwheel to its gearbox shaft, in that a shift fork (36) and a second shift rocker (37) - which is mounted in such a way as to be pivotable relative to the gearbox housing (14) about a pivoting axis (9-9) aligned perpendicular to the gearbox shafts - and a driver element (40) having a shift slot (38) for the engagement of a shift finger (39) of the shifting shaft (19) are both used for actuating the third gearwheel clutch and arranged fixed in terms of motion relative to one another, in that a second pivotable blocking member (41) is arranged in a gearbox plane (VI-VI) of the gearbox housing (14) perpendicular to the geometric axis (27-27) for the movements of the blocking member (26) capable of linear motion, in that the one end (41-1) of the second pivotable blocking member (41) has both a recess (42) provided with inclined surfaces (29-41 (5.) and 29-41 (6.)) and, in addition, is arranged in such a way as to be displaceable relative to the gearbox housing (14) in the directions of a geometric axis (43-43) which is perpendicular to the geometric axis (27-27) for the movements of the blocking member (26) capable of linear motion, in that the other end (41-2) of the second pivotable blocking member (41) is connected directly and in an exclusively pivotable manner to the second shift rocker (37) by a joint (44), in that, in the neutral position (30) of the second shift rocker (37) corresponding to the disengaged state of the associated third gearwheel clutch, the recess (42) at the one end (41-1) of the second pivotable blocking member (41) overlaps with the geometric axis (27-27) for the movements of the blocking member (26) capable of linear motion, in that, in the gear position (37-5 or 37-6) of the second shift rocker (37) corresponding to the engaged state of the associated third gearwheel clutch, a blocking surface (SF-5 or SF-6) of the second pivotable blocking member (41) overlaps with the geometric axis (27-27) for the movements of the blocking member (26) capable of linear motion, in that a second blocking member (45) capable of linear motion is additionally provided and is guided in such a way as to be displaceable relative to the gearbox housing (14) along the geometric axis (27-27) for the movements of the first blocking member (26) capable of linear motion, in that the extent of the second blocking member (45) capable of linear motion, in the directions of the geometric axis (27-27) for the movements of the blocking members (26 and 45) capable of linear motion, corresponds to the distance between the two housing planes (V-V and VI-VI) for the arrangement of the pivotable blocking members (32 and 41), in that the two blocking members (26 and 45) capable of linear motion can be supported relative to one another at their mutually facing ends by stop surfaces (46-26 (45) and 46-45 (26)) normal to the axis, in that the second blocking member (45) capable of linear motion has inclined surfaces (29-45 (32)) interacting with the recess (31) in the first pivotable blocking member (32) at its end facing the first blocking member (26) capable of linear motion, in that the second blocking member (45) capable of linear motion has inclined surfaces (29-45 (41)) interacting with the recess (42) in the second pivotable blocking member (41) at its end remote from the first blocking member (26) capable of linear motion, and in that the arrangement is furthermore such that, when the associated one gearwheel clutch is engaged by means of the shift rod (15), the second blocking member (45) capable of linear motion is necessarily displaced by means of the stop surfaces (46-26 (45) and 46-45 (26)) normal to the axis into its one end position, in which its end remote from the first blocking member (26) capable of linear motion engages in the recess (42) in the second pivotable blocking member (41), in that when the associated other gearwheel clutch is engaged by means of the first shift rocker (22), the second blocking member (45) capable of linear motion is necessarily displaced, by the inclined surfaces (29-32 (3.) and 29-32 (4.)) on the recess (31) in the first pivotable blocking member (32), into its one end position, in which its end remote from the first blocking member (26) capable of linear motion engages in the recess (42) in the second pivotable blocking member (41), and in that, when the additional third gearwheel clutch is engaged by means of the second shift rocker (37), the second blocking member (45) capable of linear motion is necessarily displaced, by means of the inclined surfaces (29-41 (5.) and 29-41 (6.)) of the recess (42) in the second pivotable blocking member (41), into its other end position, in which the first blocking member (26) capable of linear motion is necessarily actuated by the stop surfaces (46-26 (45) and 46-45 (26)) into its one end position for the engagement of its adjacent end (26-1) in the recess (28) in the shift rod (15), and the second blocking member (45) capable of linear motion engages by its end facing the first blocking member (26) capable of linear motion in the recess (31) in the first pivotable blocking member (32).

3. Shift actuator according to Claim 1 or 2, characterized in that an additional fourth gearwheel clutch is provided for coupling a gearwheel to its gearbox shaft, in that a shift fork (48) and an additional second shift rod (49), which is arranged parallel to the axes of the gearbox shafts and in such a way as to be axially displaceable relative to the gearbox housing (14), and a driver element (52) having a shift slot (50) for the engagement of a shift finger (51) of the shifting shaft (19) are both used for actuating the fourth gearwheel clutch and arranged fixed in terms of motion relative to one another, in that the second shift rod (49) has a recess (53) provided with inclined surfaces (29-49 (54)), in that, in the neutral position (30) of the second shift rod (49) corresponding to the disengaged state of the fourth gearwheel clutch, the geometric axis (27-27) for the movements of the first blocking member (26) capable of linear motion and the recess (53) in the second shift rod (49) overlap, in that the second shift rod (49) has a blocking surface (SF-1 or SF-2), in that, in the gear position (49-1 or 49-2) of the second shift rod (49) corresponding to the engaged state of the fourth gearwheel clutch, the geometric axis (27-27) for the movements of the first blocking member (26) capable of linear motion and the associated blocking surface (SF-1 or SF-2) of the second shift rod (49) overlap, in that an additional blocking member (54) capable of linear motion, which is associated with the second shift rod (49), is provided and is guided in such a way as to be axially displaceable relative to the gearbox housing (14) along the geometric axis (27-27) for the movements of the first blocking member (26) capable of linear motion, in that the extent of the blocking member (54) capable of linear motion and associated with the second shift rod (49) corresponds to the distance between the recess (53) in the second shift rod (49) and the housing plane (V-V or VI-VI) for the arrangement of the first or second pivotable blocking member (32 or 41), in that the blocking member (54) capable of linear motion and associated with the second shift rod (49) can be supported by its end facing the first blocking member (26) capable of linear motion on the facing end of the first or second blocking member (26 or 45) capable of linear motion, via stop surfaces (46-54 (45)) normal to the axis, in that that end of the blocking member (54) capable of linear motion and associated with the second shift rod (49) which faces the first blocking member (26) capable of linear motion is provided with inclined surfaces (29-54 (41)) which interact with the inclined surfaces (29-32 (3.), 29-32 (4.) or 29-41 (5.), 29-41 (6.)) of the recess (31 or 42) in the first or second pivotable blocking member (32 or 41), in that that end of the blocking member (54) capable of linear motion and associated with the second shift rod (49) which is remote from the first blocking member (26) capable of linear motion is provided with inclined surfaces (29-54 (49)) which interact with the inclined surfaces (29-49 (54)) of the recess (53) in the second shift rod (49), in that, in its one end position, the blocking member (54) capable of linear motion and associated with the second shift rod (49) has necessarily displaced the first blocking member (26) capable of linear motion by means of its stop surface (46-54 (45)) normal to the axis, either directly or via the second blocking member (45) capable of linear motion, into its one end position corresponding to engagement in the recess (28) in the first shift rod (15) and engages with its end facing the first blocking member (26) capable of linear motion in the recess (31 or 42) in the first or second pivotable blocking member (32 or 41), in that, in its other end position, the blocking member (54) capable of linear motion and associated with the second shift rod (49) engages in the recess (53) in the second shift rod (49) by its end remote from the first blocking member (26) capable of linear motion, and in that the arrangement is such that, when the fourth gearwheel clutch is engaged by means of the second shift rod (49), the associated blocking member (54) capable of linear motion is necessarily displaced into its one end position by the action of the inclined surfaces (29-49 (54) and 29-54 (49)) of the recess (53) in the second shift rod (49) and of that end of the second blocking member (54) capable of linear motion and associated with the second shift rod (49) which is remote from the first blocking member (26) capable of linear motion, and, in the gear position (49-1 or 49-2) of the second shift rod (49) corresponding to the engaged state of the fourth gearwheel clutch, displacement of the blocking member (54) capable of linear motion and associated with the second shift rod (49) into its other end position is blocked by the blocking surface (SF-1 or SF-2) of the second shift rod (49), and in that the arrangement is furthermore such that, when the one gearwheel clutch is engaged, the recess (28) in the first shift rod (15) necessarily displaces the first blocking member (26) capable of linear motion, by means of the associated inclined surfaces (29-15 (26) and 29-26 (15)), into its other end position for engagement in the recess (31) in the first pivotable blocking member (32) and thus necessarily also displaces the blocking member (54) capable of linear motion and associated with the second shift rod (49) into its other end position by means of the stop surfaces (46-26 (45), 46-45 (26), 46-45 (54) and 46-54 (45)) normal to the axis, and in that the arrangement is furthermore such that, when the other gearwheel clutch is engaged, the recess (31) in the first pivotable blocking member (32) necessarily actuates the blocking member (54) capable of linear motion and associated with the second shift rod (49) into its other end position by means of the associated inclined surfaces (29-32 (3.), 29-32 (4.), 29-54 (41)), either directly or via the associated inclined surfaces (29-45 (32)) of the second blocking member (45) capable of linear motion and the stop surfaces (46-45 (54) and 46-54 (45)) of the second blocking member (45) capable of linear motion and of the blocking member (54) capable of linear motion and associated with the second shift rod (49), the said stop surfaces being normal to the axis, and in that, finally, the arrangement is such that, when the third gearwheel clutch is engaged, the recess (42) in the second pivotable blocking member (41) necessarily actuates the blocking member (54) capable of linear motion and associated with the second shift rod (49), by the action of the associated inclined surfaces (29-41 (5.), 29-41 (6.) and 29-54 (41)), into its other end position for engagement in the recess (53) in the second shift rod (49).

4. Shift actuator according to one of Claims 1 to 3, characterized in that the inclined surfaces (29-32 (3.), 29-32 (4.) or 29-41 (5.), 29-41 (6.)) associated with a pivotable blocking member (32 or 41) interact via a ball (55) with inclined surfaces (29-26 (32) or 29-45 (32) or 29-45 (41) or 29-54 (41)) associated with a blocking member (26 or 45 or 54) capable of linear motion.

5. Shift actuator according to one of Claims 1 to 4, characterized in that at least one blocking member (26 or 45 or 54) capable of linear motion is designed as a box-shaped sheet-metal pressing.

6. Shift actuator according to Claim 5, characterized in that the blocking members (26, 45, 54) capable of linear motion are accommodated in a form-locking manner, with clearance for motion, in a box-shaped blocker housing (56).

7. Shift actuator according to Claim 6, characterized in that the blocker housing (56) has means for accommodating at least one ball (55) in a loss-proof manner.

8. Shift actuator according to Claim 6 or 7, characterized in that the blocker housing (56) has a U-shaped part-housing (57) which surrounds each of the blocking members (26, 45, 54) capable of linear motion on three sides.

9. Shift actuator according to Claim 8, characterized in that the part-housing (57) has guide webs (58) arranged on both sides of a pivotable blocking member (32 or 41).

10. Shift actuator according to one of Claims 6 to 9, characterized in that the blocker housing (56) is held on a bearing plate (59) arranged fixed in terms of motion relative to the gearbox housing (14).

11. Shift actuator according to one of Claims 6 to 10, characterized in that the blocker housing (56) forms a preassemblable unit with the blocking members (26, 45, 54) capable of linear motion.

## Revendications

1. Dispositif de manoeuvre de changement de vitesse pour boîte de vitesses à roues dentées, comportant deux accouplements à roue dentée, chacun pour assurer l'accouplement d'une roue dentée à son arbre de boîte de vitesses, avec une tige de manoeuvre (15) disposée parallèlement à l'axe des arbres de la boîte de vitesses et montée de façon déplaçable axialement par rapport à un carter de boîte de vitesses, sur laquelle sont disposées solidairement, tant une fourche de manoeuvre (16) pour assurer l'actionnement d'un premier accouplement à roue dentée, qu'également un organe d'entraînement (20) présentant une gorge de manoeuvre (17) pour l'engagement d'un doigt de manoeuvre (18) d'un arbre de manoeuvre (19), avec un levier oscillant de manoeuvre (22) monté à pivotement par rapport au carter de boîte de vitesses, susceptible de pivoter autour d'un axe de pivotement géométrique (21-21), perpendiculaire aux arbres de boîte de vitesses, levier oscillant de manoeuvre sur lequel sont disposées solidairement tant une fourche de manoeuvre (23) pour l'actionnement de l'autre accouplement à roue dentée, qu'également un organe d'entraînement (25) présentant une gorge de manoeuvre (24) pour l'engagement d'un doigt de manoeuvre (18) de l'arbre de manoeuvre (19), avec un organe de blocage (26) à mobilité linéaire, monté de façon déplaçable axialement par rapport au carter de boîte de vitesses, dans les directions d'un axe géométrique (27-27) perpendiculaire à la tige de manoeuvre (15), et coopérant, par l'unr de ses extrémités (26-1), avec un évidement (28) de la tige de manoeuvre (15) en utilisant des faces inclinées (29-15,29-26(15)), de manière que, d'une part, dans la position neutre, qui correspond à l'état débrayé de l'accouplement à roue dentée afférent, de la tige de manoeuvre (15), son évidement (28) et l'axe géométrique (27-27) pour le déplacement de l'organe de blocage (26) soient en recouvrement, faisant que l'organe de verrouillage (26) est susceptible d'être actionné dans la direction, orientée vers la tige de manoeuvre (15), d'une de ses positions finales, dans laquelle la tige de manoeuvre (15) peut être bloquée pratiquement sans possibilité de déplacement par rapport au carter de boîte de vitesses, par l'intermédiaire de son évidement (28) et par l'intermédiaire de l'organe de blocage (26), et, que d'autre part, par un actionnement de la tige de manoeuvre (15) placée en position neutre, pour embrayer un accouplement à roue dentée afférent, l'organe de blocage (26) à mobilité linéaire est déplaçable, par l'action des surfaces inclinées (29-15, 29-26, (15)), dans la direction, s'éloignant de la tige de manoeuvre (15), de son autre position finale, dans laquelle l'organe de blocage (26) à mobilité linéaire est susceptible d'être mis en prise, par son autre extrémité (26-2), avec un évidement (39) ménagé sur une extrémité d'un autre organe de blocage (32), qui est disposé, avec une mobilité en pivotement dans un plan de carter de la boîte de vitesses perpendiculaire à l'axe géométrique (27-27) prévu pour les déplacements de l'organe de blocage (26) à mobilité linéaire, et est relié avec une dépendance cinématique, par l'intermédiaire d'une articulation (33), à son autre extrémité au levier oscillant de manoeuvre (22), de manière que, d'une part, dans la position neutre, correspondant à l'état débrayé de l'autre accouplement à roue dentée afférent, du levier oscillant de manoeuvre (22), l'évidement (31) de l'organe de blocage (32) à mobilité en pivotement et l'axe géométrique (27-27) prévu pour les déplacements de l'organe de blocage (26) à mobilité linéaire soient en recouvrement, et que, d'autre part, dans la position de vitesse engagée, correspondant à l'état embrayé de l'autre accouplement à roue dentée afférent, du levier oscillant de manoeuvre (22), l'axe géométrique (27-27) des déplacements de l'organe de blocage (26) à mobilité linéaire et une surface de blocage (SF-4) de l'organe de blocage (32) à mobilité en pivotement soient en recouvrement, faisant qu'un actionnement de l'organe de blocage (26) à mobilité linéaire à sa position finale pour l'engagement dans l'évidement (31) de l'organe de blocage (32) à mobilité en pivotement est bloqué, et pour lequel, dans la position de vitesse engagée, correspondant à l'état embrayé du premier accouplement à roue dentée afférent, de la tige de manoeuvre (15), l'axe géométrique (27-27) du déplacement de l'organe de blocage (26) à mobilité linéaire et une surface de blocage (SF-R) de la tige de manoeuvre (15) sont en recouvrement, faisant qu'un actionnement d'organe de blocage (26) à mobilité linéaire, à sa position finale pour l'engagement dans l'évidement (28) de la tige de manoeuvre (15) est bloqué, et pour lequel d'évidement (31) de l'organe de blocage (32) à mobilité en pivotement et l'extrémité (26-2) afférente de l'organe de blocage (26) à mobilité linéaire coopèrent par l'intermédiaire de surfaces inclinées (29-26(32)), de manière que, par un actionnement du levier oscillant de manoeuvre (22) à la position de vitesse engagée, l'organe de blocage (26) à mobilité linéaire soit obligatoirement actionné, par l'intermédiaire de l'évidement (31) de l'organe de blocage (29) à mobilité linéaire, pour passer à sa position finale afin d'assurer l'engagement dans l'évidement (28) de la tige de manoeuvre (15),
caractérisé en ce que
l'organe de blocage (32) à mobilité en pivotement, par l'une des ses extrémités (32-1) présentant l'évidement (31), est de plus disposé de façon déplaçable par rapport au carter de boîte de vitesses, dans les directions d'un axe géométrique (34-34) et, à son autre extrémité (32-2), est relié, directement et exclusivement avec une mobilité en pivotement, au levier oscillant de manoeuvre (22) au moyen de l'articulation (33), et les axes géométriques (27-27 et 34-34) des déplacements des deux organes de blocage (26 et 32) étant perpendiculaires l'un à l'autre.

2. Dispositif de manoeuvre de changement de vitesse selon la revendication 1, caractérisé en ce qu'un troisième accouplement à roue dentée supplémentaire est prévu pour l'accouplement d'une roue dentée à son arbre de boîte de vitesses, en ce qu'une fourche de manoeuvre (36) et un deuxième levier oscillant de manoeuvre (37) - qui est monté pivotant par rapport au carter de boîte de vitesses (14), autour d'un axe de pivotement (9-9) orienté perpendiculairement par rapport aux arbres de boîte de vitesses - ainsi qu'un organe d'entraînement (40) présentant une gorge de manoeuvre (38) pour l'engagement d'un doigt de manoeuvre (39) de l'arbre de manoeuvre (19), sont utilisés tant pour l'actionnement du troisième accouplement à roue dentée ainsi qu'également sont disposés solidaires les uns des autres, en ce qu'un deuxième organe de verrouillage (41) à mobilité en pivotement est disposé dans un plan de carter (VI-VI) du carter de boîte de vitesses (14), plan perpendiculaire à l'axe géométrique (27-27) des déplacements de l'organe de blocage (26) à mobilité linéaire, en ce qu'une extrémité (41-1) du deuxième organe de blocage (41) à mobilité en pivotement, présente tant un évidement (42) muni de faces inclinées (29-41(5.)) et (29-41(6.)) qu'également est en plus déplacable par rapport au carter de boîte de vitesse (14), dans les directions d'un axe géométrique (43-43) perpendiculaire à l'axe géométrique (27-27) des déplacements de l'organe de blocage (26) à mobilité linéaire, en ce que l'autre extrémité (41-2) du deuxième organe de blocage (41) à mobilité en pivotement est reliée, directement et avec exclusivement une mobilité en pivotement, par une articulation (44), au deuxième levier oscillant de manoeuvre (37), en ce que, dans la position neutre (30), correspondant à l'état débrayé du troisième accouplement à roue dentée afférent, du deuxième levier oscillant de manoeuvre (37), l'évidement (42), ménagé sur une extrémité (41-1) du deuxième organe de blocage (41) à mobilité en pivotement, est en recouvrement avec l'axe géométrique (27-27) des déplacements de l'organe de blocage (26) à mobilité linéaire, en ce que, dans la position de vitesse engagée (37-5 ou 37-6), correspondant à l'état embrayé du troisième accouplement à roue dentée afférent, du deuxième levier oscillant de manoeuvre (37), une surface de blocage (SF-5 ou SF-6) du deuxième organe de blocage (41) à mobilité en pivotement est en recouvrement avec l'axe géométrique (27-27) des déplacements de l'organe de blocage (26) à mobilité linéaire, en ce que, en plus, un deuxième organe de blocage (45) à mobilité linéaire est prévu et est guidé de façon déplacable par rapport au carter de boîte de -vitesses (14), le long de l'axe géométrique (27-27) des déplacements du premier organe de blocage (26) à mobilité linéaire, en ce que l'étendue du deuxième organe de blocage (45) à mobilité linéaire dans les directions de l'axe géométrique (27-27) des déplacements des organes de blocage (26 et 45) à mobilité linéaire correspond à l'espacement entre les deux plans de carter (V-V et VI-VI) de l'agencement des organes de blocage (32 et 41) à mobilité en pivotement, en ce que les deux organes de blocage (26 et 45) à mobilité linéaire sont susceptibles d'être soutenus l'un par rapport à l'autre sur leurs extrémités tournées l'une vers l'autre, par l'intermédiaire de faces de butée (46-26,45) et (46-45(26)) orientées perpendicu-lairement par rapport à l'axe, en ce que le deuxième organe de blocage (45) à mobilité linéaire présente, sur son extrémité tournée vers le premier organe de blocage (26) à mobilité linéaire, des surfaces inclinées (29-45(32)) coopèrent avec l'évidement (31) du premier organe de blocage (32) à mobilité en pivotement, en ce que le deuxième organe de blocage (45) à mobilité linéaire présente, sur son extrémité opposée au premier organe de blocage (26) à mobilité linéaire, des faces inclinées (29-45(41)), qui coopèrent avec l'évidement (42) du deuxième organe de blocage (41) à mobilité en pivotement, et en ce que l'agencement est encore tel que, lorsque l'on embraye un accouplement à roue dentée afférent par l'intermédiaire de la tige de manoeuvre (15), le deuxième organe de blocage (45) à mobilité linéaire est obligatoirement déplacé, par l'intermédiaire des faces de butée (46-26 (45) et 46-45(26)) perpendiculaires à l'axe, en une de ses positions finales dans laquelle son extrémité, opposée au premier organe de blocage (26) à mobilité linéaire, s'engage dans l'évidement (42) du deuxième organe de blocage (41) à mobilité linéaire, en ce que, lors de l'embrayage de l'autre accouplement à roue dentée afférent, par l'intermédiaire du premier levier oscillant de manoeuvre (22), le deuxième organe de blocage (45) à mobilité linéaire est obligatoirement déplacé, au moyen des surfaces inclinées (29-32(3.) et 29-32(4.)), sur l'évidement (31) du premier organe de blocage (32) à mobilité en pivotement, en l'une de ses positions finales dans laquelle son extrémité, située à l'opposé du premier organe de blocage (26) à mobilité linéaire, s'engage dans l'évidement (42) du deuxième organe de blocage (41) à mobilité en pivotement, et en ce que, lors d'un embrayage du troisième accouplement à roue dentée supplémentaire, par l'intermédiaire du deuxième levier oscillant de manoeuvre (37), le deuxième organe de blocage (45) à mobilité linéaire est obligatoirement déplacé, par l'intermédiaire des faces inclinées (29-41(5.) et 29-41(6.)) de l'évidement (42) du deuxième organe de blocage (41) à mobilité en pivotement, en une de ses positions finales dans laquelle le premier organe de blocage à mobilité linéaire (26) est obligatoirement actionné, par les faces de butée (46-26(45) et 46-45(26)), en l'une de ses positions finales assurant l'engagement de son extrémité (26-1) voisine dans l'évidement (28) de la tige de manoeuvre (15), et le deuxième organe de blocage (45) à mobilité linéaire s'engageant, par son extrémité tournée vers le premier organe de blocage (46) à mobilité linéaire, dans l'évidement (31) du premier organe de blocage (32) à mobilité en pivotement.

3. Dispositif de manoeuvre de changement de vitesse selon la revendication 1 ou 2, caractérisé en ce qu'un quatrième accouplement à roue dentée supplémentaire est prévu pour l'accouplement d'une roue dentée sur son arbre de boîte de vitesses, en ce qu'une fourche de manoeuvre (48) et une deuxième tige de manoeuvre (49) supplémentaire, disposée parallèlement à l'axe des arbres de boîte de vitesses et déplacable axialement par rapport au carter de boîte de vitesses (14), et un organe d'entraînement (52) présentant une gorge de guidage (50) pour l'engagement d'un doigt de manoeuvre (51) de l'arbre de manoeuvre (19) tant sont utilisés pour l'actionnement du quatrième accouplement-à roue dentée, qu'également sont disposés solidaires les uns par rapport aux autres, en ce que la deuxième tige de manoeuvre (49) présente un évidement (53) muni de faces inclinées (29-49(54)), et en ce que dans la position neutre (30), correspondant à l'état débrayé du quatrième accouplement à roue dentée, de la deuxième tige de manoeuvre (49), l'axe géométrique (27-27) des déplacements du premier organe de blocage (26) à mobilité linéaire et l'évidement (53) de la deuxième tige de manoeuvre (49) sont en recouvrement, en ce que la deuxième tige de manoeuvre (49) présente une face de blocage (SF-1 ou SF-2), en ce que, dans la position de vitesse engagée (49-1 ou 49-2), correspondant à l'état embrayé du quatrième accouplement à roue dentée, de la deuxième tige de manoeuvre (49), l'axe géométrique (27-27) des déplacements du premier organe de blocage (26) à mobilité linéaire et la face de blocage (SF-1 ou SF-2) associée de la deuxième tige de manoeuvre (49) sont en recouvrement, en ce qu'un organe de blocage (54) à mobilité linéaire supplémentaire, appartenant à la deuxième tige de manoeuvre (49) est prévu et est guidé, de façon déplacable axialement par rapport au carter de boîte de vitesses (14), le long de l'axe géométrique (27-27) des déplacements du premier organe de blocage (26) à mobilité linéaire, en ce que l'étendue de l'organe de blocage (54) à mobilité linéaire appartenant à la deuxième tige de manoeuvre (49) correspond à l'espacement entre l'évidement (53) de la deuxième tige de manoeuvre (49) et le plan de carter (V-V ou VI-VI) pour l'agencement du premier ou du deuxième organe de blocage (32 ou 41) à mobilité en pivotement, en ce que l'organe de blocage (54) à mobilité linéaire appartenant à la deuxième tige de manoeuvre (49) est susceptible d'être soutenu, par son extrémité tournée vers le premier organe de blocage (26) à mobilité linéaire, par l'intermédiaire de faces de butée (46-54(45)) perpendiculaires à l'axe, sur l'extrémité tournée vers lui du premier ou du deuxième organe de blocage (26 ou 45) à mobilité linéaire, en ce que l'extrémité, tournée vers le premier organe de blocage (26) à mobilité linéaire, de l'organe de blocage (54) à mobilité linéaire appartenant à la deuxième tige de manoeuvre (49) est munie de faces inclinées (29-54(41)), qui coopèrent avec les faces inclinées (29-33(3.), 29-32(4.) ou 29-41(5.), 29-41(6.)) de l'évidement (31 ou 42) du premier ou du deuxième organe de blocage (32 ou 41) à mobilité en pivotement, en ce que l'extrémité, située à l'opposé du premier organe de blocage (26) à mobilité linéaire, de l'organe de blocage (54) à mobilité linéaire associé à la deuxième tige de manoeuvre (49) est munie de faces inclinées (29-54(49)), qui coopèrent avec les faces inclinées (29-49(54)) de l'évidement (53) de la deuxième tige de manoeuvre (49), en ce que l'organe de blocage (54) à mobilité linéaire appartenant à la deuxième tige de manoeuvre (49), en une de ses positions finales, par l'intermédiaire de sa face de butée (46-54(45)) perpendiculaire à l'axe, a obligatoirement déplacé le premier organe de blocage (26) à mobilité linéaire, soit directement, soit par l'intermédiaire du deuxième organe de blocage (45) à mobilité linéaire, à sa position finale correspondant à l'engagement dans l'évidement (28) de la première tige de manoeuvre (15) et, par son extrémité tournée vers le premier organe de blocage (26) à mobilité linéaire, s'engage dans l'évidement (31 ou 42) du premier ou du deuxième organe de blocage (32 ou 41) à mobilité en pivotement, en ce que l'organe de blocage (54) à mobilité linéaire, appartenant à la deuxième tige de manoeuvre (49), s'engage, dans son autre position finale, par son extrémité située à l'opposé du premier organe de blocage (26) à mobilité linéaire, dans l'évidement (53) de la deuxième tige de manoeuvre (49), et en ce que l'agencement est tel que, lors de l'embrayage du quatrième accouplement à roue dentée, par l'intermédiaire de la deuxième tige de manoeuvre (49), l'organe de blocage (54) à mobilité linéaire afférent est déplacé obligatoirement dans une de ses positions finales sous l'effet des faces inclinées (29-49(54) et 29-54(49)) de l'évidement (53) de la deuxième tige de manoeuvre (49) et de l'extrémité, située à l'opposé du premier organe de blocage (26) à mobilité linéaire, du deuxième organe de blocage (54) à mobilité linéaire, appartenant à la deuxième tige de manoeuvre (49), et, dans la position de vitesse engagée (49-1 ou 49-2), correspondant à l'état embrayé du quatrième accouplement à roue dentée, de la deuxième tige de manoeuvre (49), un déplacement à son autre position finale de l'organe de blocage (54) à mobilité linéaire appartenant à la deuxième tige de manoeuvre (49), est bloqué par la face de blocage (SF-1 ou SF-2) de la deuxième tige de manoeuvre (49), et en ce que l'agencement est encore tel que, lors de l'embrayage d'un accouplement à roue dentée, l'évidement (28) de la première tige de manoeuvre (15) déplace, par l'intermédiaire des faces inclinées (29-15(26) et 29-26(15)) associées, obligatoirement le premier organe de blocage (26) à mobilité linéaire dans son autre position pour l'engagement dans l'évidement (31) du premier organe de blocage (32) à mobilité en pivotement et, ainsi, par l'intermédiaire des faces de butée (46-26(45), 46-45(26), 46-45(54) et 46-54(45)) perpendiculaires à l'axe, déplace obligatoirement également l'organe de blocage (54) à mobilité linéaire appartenant à la deuxième tige de manoeuvre (49) à son autre position finale, et en ce que l'agencement est en plus tel que, lors de l'embrayage de l'autre accouplement à roue dentée, l'évidement (31) du premier organe de blocage (32) à mobilité en pivotement actionne obligatoirement à son autre position finale l'organe de blocage (54) à mobilité linéaire, appartenant à la deuxième tige de manoeuvre (49), par l'intermédiaire des faces inclinées (29-32(3.), 29-32 (4.), 29-54(41)) associées, directement ou par l'intermédiaire des faces inclinées 29-45(32)) associées du deuxième organe de blocage (45) à mobilité linéaire et des faces de butée (46-45(54) et 46-54(45)), perpendiculaires à l'axe, du deuxième organe de blocage (45) à mobilité linéaire et de l'organe de blocage (54) à mobilité linéaire appartenant à la deuxième tige de manoeuvre (59), et en ce que l'agencement est enfin encore tel que, lors de l'embrayage du troisième accouplement à roue dentée, l'évidement (42) du deuxième organe de blocage (41) à mobilité en pivotement actionne obligatoirement l'organe de blocage (54) à mobilité linéaire appartenant à la deuxième tige de manoeuvre (49), sous l'effet des faces inclinées (29-41(5.), 29-41(6.) et 29-54(41)) associées, à son autre position finale pour l'engagement dans l'évidement (53) de la deuxième tige de manoeuvre (49).

4. Dispositif de manoeuvre de changement de vitesse selon l'une quelconque des revendications 1 à 3, caractérisé en ce que les faces inclinées (29-32(3.), 29-32 (4.) ou 29-41(5.), 29-41(6.)), appartenant à un organe de blocage (32 ou 41) à mobilité en pivotement, coopèrent, par l'intermédiaire d'une bille (55), avec des faces inclinées (29-26(32) ou 29-45(32) ou 29-45(41) ou 29-54(41)) appartenant à un organe de blocage (26 ou 45 ou 54) à mobilité linéaire.

5. Dispositif de manoeuvre de changement de vitesse selon l'une quelconque des revendications 1 à 4, caractérisé en ce qu'au moins un organe de blocage (26 ou 45 ou 54) à mobilité linéaire est réalisé sous la forme d'une pièce en tôle emboutie, en forme de caisson.

6. Dispositif de manoeuvre de changement de vitesse selon la revendication 5, caractérisé en ce que les organes de blocage (26, 45, 54) à mobilité linéaire sont logés avec ajustement de forme, avec un jeu de déplacement, dans un carter de blocage (56) en forme de caisson.

7. Dispositif de manoeuvre de changement de vitesse selon la revendication 6, caractérisé en ce que le carter de blocage (56) présente des moyens pour loger au moins une bille (55), d'une façon empêchant qu'elles se perdent.

8. Dispositif de manoeuvre de changement de vitesse selon la revendication 6 ou 7, caractérisé en ce que le carter de blocage (56) présente un carter partiel (57) en forme de U, entourant chaque fois sur trois côtés les organes de blocage (26, 45, 54) à mobilité linéaire.

9. Dispositif de manoeuvre de changement de vitesse selon la revendication 8, caractérisé en ce que le carter partiel (57) présente des nervures de guidage (58) disposées des deux côtés d'un organe de blocage (32 ou 41) à mobilité en pivotement.

10. Dispositif de manoeuvre de changement de vitesse selon l'une quelconque des revendications 6 à 9, caractérisé en ce que le carter de blocage (56) est fixé sur un flasque de palier (59) monté solidaire par rapport au carter de boîte de vitesses (14).

11. Dispositif de manoeuvre de changement de vitesse selon l'une quelconque des revendications 6 à 10, caractérisé en ce que le carter de blocage (56) constitue, avec les organes de blocage (26, 45, 54) à mobilité linéaire, un ensemble de construction prémontable.
